# EUROPEAN PATENT SPECIFICATION

(11) **EP 2 484 213 B1**
(45) Date of publication and mention of the grant of the patent: **10.07.2013**
(21) Application number: 11166673.1
(22) Date of filing: 19.05.2011
(51) Int. Cl.: A22C 7/00

(54) **Method and machine for processing stuffed-meat food products**
Verfahren und Maschine zum Verarbeiten von fleischgefüllten Lebensmittelprodukten
Méthode et appareil pour le traitement des produits de viande farcie

(30) Priority: 08.02.2011 IT VR20110023
(43) Date of publication of application: 08.08.2012
(73) Proprietor: INOX Meccanica S.R.L., 46044 Goito, Frazione Solarolo MN (IT)
(72) Inventor: Bolzacchini, Giovanni, 46044, Goito, Frazione Solarolo MN (IT)
(74) Representative: Modiano, Micaela Nadia

(56) References cited:
- DE-A1- 3 447 306
- DE-A1- 3 926 179
- DE-B3- 10 309 467

## Description

The present invention relates to a method and a machine for processing stuffed-meat food products.

As is known, the production of stuffed-meat food products formed from a plurality of pieces of whole muscles, or other similar cold meats, involves the insertion, in envelopes which are constituted by casings made of natural or synthetic material, of pieces of muscle with the addition of other ingredients.

The filling of the envelopes is carried out by using specially-designed meat-stuffing machines, which however do not make it possible to ensure the necessary compacting of the various pieces of muscle within the envelopes, in order to prevent the presence of air cavities inside the stuffed meat, which reduce the quality of the final product.

Machines for pressing meat into containers with a chamber which can be sealed off in an airtight manner and evacuated are disclosed in DE 39 26 179 A1, DE 34 47 306 A1, and DE 103 09 467 B3.

The aim of the present invention is to resolve the above-mentioned problem, by providing a method that makes it possible to process stuffed-meat food products in order to prevent unwanted air cavities from remaining within them.

Within this aim, an object of the invention is to provide a machine for processing stuffed-meat food products which makes it possible to very quickly and effectively ensure the elimination of any air cavities within the stuffed-meat food products.

Another object of the invention is to provide a machine for processing stuffed-meat food products which, owing to its distinctive implementation characteristics, is capable of offering the widest guarantees of safety and reliability in operation.

A further object of the present invention is to provide a machine for processing stuffed-meat food products which can be easily implemented with elements and materials that are readily available on the market and which, moreover, is competitive also from a purely economical viewpoint.

In accordance with the invention, there is provided a method for processing stuffed-meat food products as defined in the appended claim 1, and a machine for processing stuffed-meat food products as defined in the appended claims 2-10.

Further characteristics and advantages of the invention will become better apparent from the description of a preferred, but not exclusive, embodiment of the method and of the machine, according to the invention, illustrated by way of nonlimiting example in the accompanying drawings wherein:
Figure 1 is a partially sectional end elevation view of the machine according to the invention, with a bell-shaped body shown in the raised position;
Figure 2 is a partially sectional end elevation view of the machine according to the invention, with the bell-shaped body in the lowered position;
Figure 3 is an enlarged-scale, longitudinal sectional view of a detail of the machine according to the invention, with the bell-shaped body shown in the raised position;
Figure 4 is a cross-sectional view of the machine according to the invention, in which a bell-shaped body is shown in the raised position;
Figure 5 is a cross-sectional view of a portion of the machine according to the invention, in which the bell-shaped body is in the lowered position and which shows the action of compression bars on the stuffed-meat food products to be processed.

With reference to the figures, the method for processing stuffed-meat food products, according to the invention, consists in having, within a processing chamber 1, one or more stuffed-meat food products 2 to be processed, which have been previously prepared, in a manner that is known in itself, by filling a respective envelope with pieces of muscle or other foodstuff.

Then, in the processing chamber 1, the at least partial vacuum is created and, during the execution of the vacuum in the processing chamber 1, the stuffed-meat food products 2 are simultaneously subjected to a superficial massaging action, in such a way as to achieve the escape of air that may be present within the stuffed-meat food products 2, through openings provided for the purpose, as normal, in the envelope in which they are wrapped.

Once these operations have been executed, the stuffed-meat food products 2 are taken from the processing chamber 1 to be sent to other steps of their processing schedule.

According to another important aspect of the invention, a machine is provided for processing stuffed meat products, generally designated by the reference numeral 100, which makes it possible to perform the method described above.

With reference to the figures, the machine 100 comprises a supporting base 3 for a box-like structure 4, which is adapted to define a processing chamber 1, in which one or more stuffed-meat food products 2 to be subjected to processing can be removably received, so as to eliminate any air cavities present within them.

In particular, the processing chamber 1 can be connected to means for creating the at least partial vacuum, which have the function of producing the vacuum within the processing chamber 1.

In the processing chamber 1, there are, moreover, means for executing a massaging action on the surface of the stuffed-meat food products 2 that are inserted into the processing chamber 1; these means are designated in the figures with the reference numeral 5.

Advantageously, the box-like structure 4 is implemented via a bell-shaped body 6, open toward the supporting base 3.

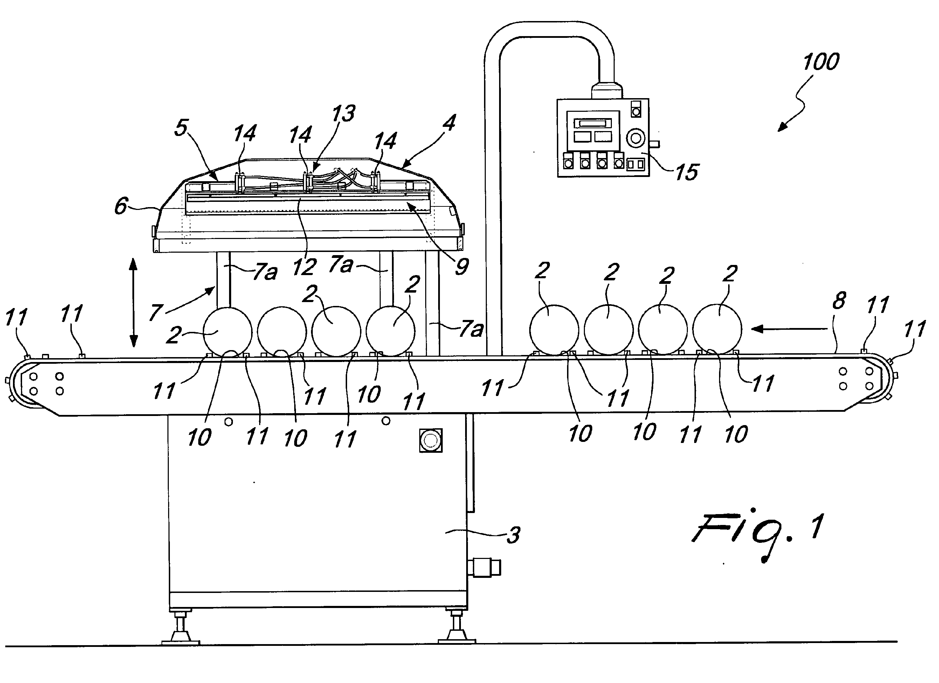

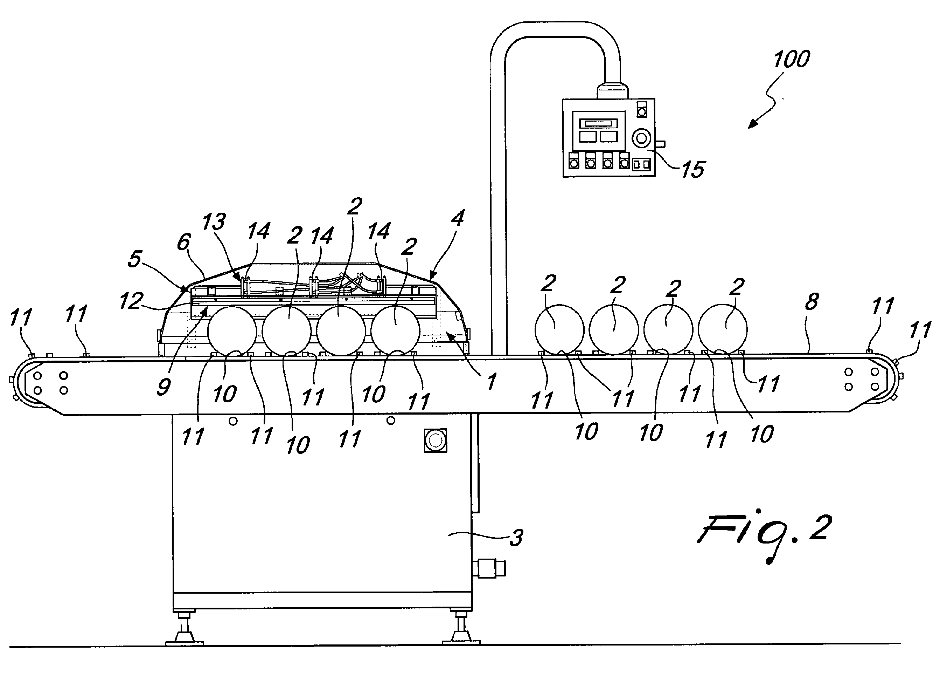

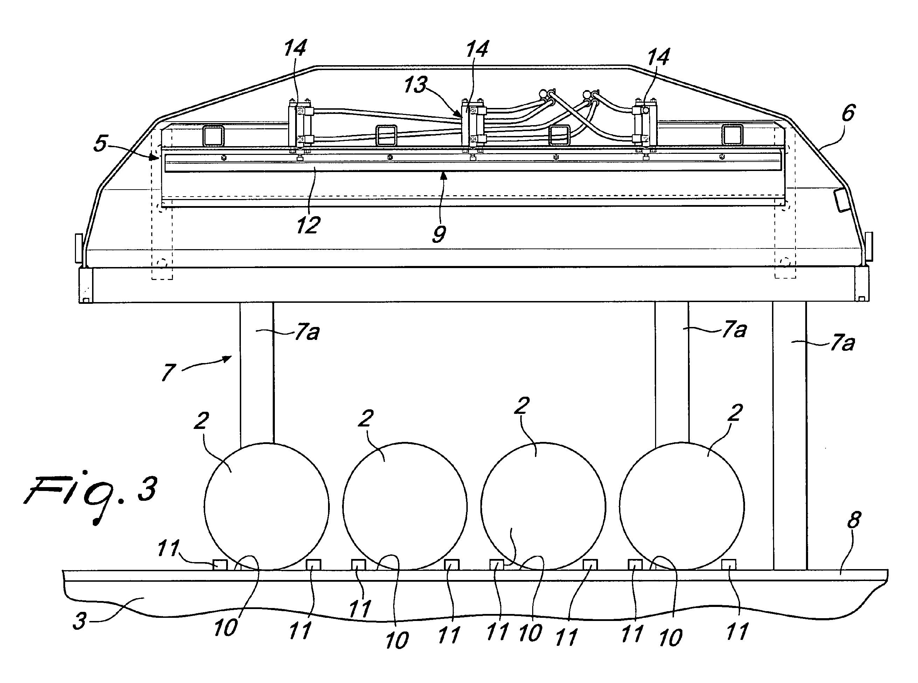

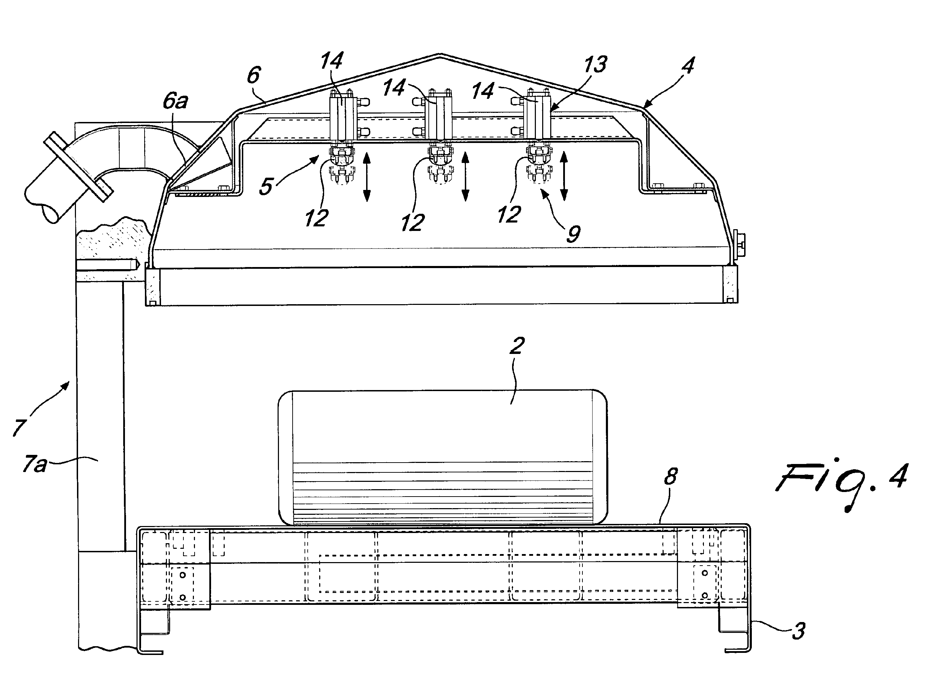

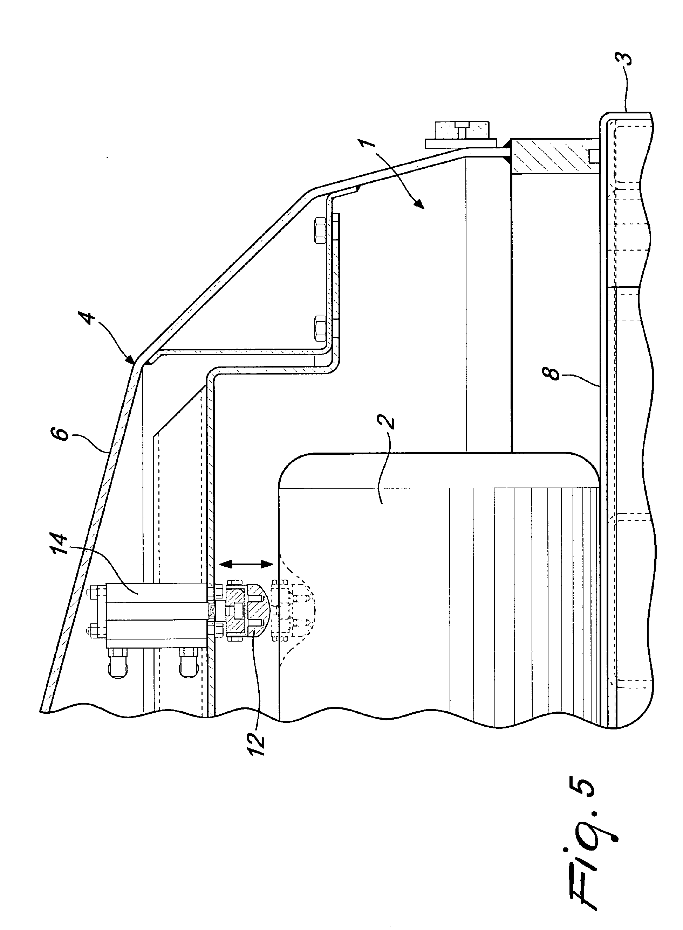

This bell-shaped body 6 is movable, relative to the supporting base 3, so as to pass from a lowered position, shown, for example, in Figures 2 and 5, in which it defines, in cooperation with the supporting base 3, the processing chamber 1, to a raised position, shown, for example, in Figures 1, 3 and 4, in which it allows the introduction, or the extraction, of the stuffed-meat food products 2 from the processing chamber 1.

For example, the bell-shaped body 6 is supported by the supporting base 3 with the help of means 7 of translational motion, the function of which it is to actuate the bell-shaped body 6 in translational motion between its lowered position and its raised position and which are, for example, constituted by linear guide elements 7a and by actuation linear actuators, not shown.

Conveniently, a conveyor 8 is mounted on the supporting base 3, which conveyor is constituted, for example, by a conveyor belt.

The conveyor 8 can be actuated intermittently to execute the transfer into the processing chamber 1 and the withdrawal from the processing chamber 1 of the stuffed-meat food products 2.

As shown, the bell-shaped body 6 is arranged above the conveyor 8.

More precisely, the above-mentioned means 5 for performing a massage on the stuffed-meat food products 2 are constituted by presser means 9, which are adapted to exercise a compression on at least one region of the outer surface of the stuffed-meat food products 2 introduced into the processing chamber 1.

The presser means 9 are movable with an alternating motion, so as to be able to cyclically exert a compression action on one or more localized regions of the outer surface of the stuffed-meat food product 2.

Conveniently, seats 10 are provided on the conveyor 8 for receiving the stuffed-meat food products 2, which are mutually separated by dividers, which are constituted, for example, by transversal ribbing 11.

The seats 10 make it possible to load, in each instance, one or more stuffed-meat food products 2 onto the conveyor 8 which are to be sent to the processing chamber 1.

As shown, the seats 10 are, moreover, oriented, conveniently, in such a way that the stuffed-meat food products 2 can be deposited on the conveyor 8, with the respective longitudinal axis of extension oriented substantially transversally to the direction of advancement of the conveyor 8.

With reference to the embodiment shown in the figures, the presser means 9 are, advantageously, constituted by at least one compression bar 12, which is mounted in the upper part of the bell-shaped body 6 and is oriented with its axis substantially parallel to the direction of advancement of the conveyor 8.

Each compression bar 12 has, conveniently, a rounded profile, directed toward the conveyor 8, and can be actuated, by actuation means 13, with an alternating approach and spacing motion with respect to the conveyor 8, so as to be able to perform a cyclic compression on a respective portion of the outer surface of the stuffed-meat food products 2 introduced into the processing chamber 1, by means of the conveyor 8.

For example, the actuation means 13 are constituted, for each compression bar 12, by a respective assembly of actuation cylinders 14, which are supported by the bell-shaped body 6.

Preferably, there are at least two compression bars 12, which are arranged mutually parallel and spaced apart, and which can be actuated, by means of the respective actuation cylinders 14, independently of each other, so as to be capable of operating, alternately, on the respective portion of the surface of the stuffed-meat food products 2, thus achieving, as a consequence, an effective massage action on the stuffed-meat food products 2 which makes it possible to promote the elimination of all the air that may have remained within them.

According to a possible variation of embodiment of the invention, not shown, the presser means 9 can comprise at least one compression element which is adapted to be brought into contact with the outer surface of at least one of the stuffed-meat food products 2 introduced into the processing chamber 1 and which can, subsequently, be actuated to move along a direction of movement that is substantially parallel to the longitudinal extension of the stuffed-meat food products 2, so as to perform a massage over the entire length of the stuffed-meat food products 2.

Optionally, this compression element can be moved along its direction of movement with an alternating back-and-forth motion and it can be implemented by means of a roller, a bar or other equivalent element, arranged with the corresponding axis substantially at right angles to the direction of extension of the food products 2.

Conveniently, the above-mentioned means of creating the at least partial vacuum are implemented by providing, in the bell-shaped body 6, a suction inlet 6a, which can be connected to a vacuum pump, not shown. The activation of the vacuum pump and of the actuation means 13 is, advantageously, managed by a programmable control unit, which is conveniently provided with a specially-designed user interface 15 and is constituted, for example, by a PLC system or the like, which makes it possible to control the cycle of processing the stuffed-meat food products 2.

The operation of the machine according to the invention is as follows.

The stuffed-meat food products 2 to be subjected to processing in order to eliminate the air within them are loaded at one end of the conveyor 8, each one being arranged in a corresponding seat 10.

With the bell-shaped body 6 in the raised position, the conveyor 8 is actuated until the stuffed-meat food products 2 loaded thereon are moved under the bell-shaped body 6; after this the conveyor 8 is stopped.

Subsequently, the means 7 of translational motion of the bell-shaped body 6 are activated, so as to bring the bell-shaped body 6 from the raised position to the lowered position, consequently closing the processing chamber 1.

At this point, the vacuum pump is activated so as to create, within the processing chamber 1, the at least partial vacuum and the actuation means 13 are activated, so that the compression bars 12 perform, by means of an alternating approach and spacing motion thereof with respect to the conveyor 8, a cyclic compression action on a respective portion of the stuffed-meat food products 2, thus performing, in practice, a massage on the outer surface of the stuffed-meat food products 2.

The sequence of movements performed by the various compression bars 12 can be programmed, according to requirements, via the user interface 15 of the control unit.

During this step, the air trapped within the stuffed-meat food products 2 is pushed to escape from the stuffed-meat food products 2 themselves, through the openings provided in their envelope, thanks to the combined action of the vacuum created in the processing chamber 1 by the vacuum pump and of the massage performed by means of the compression bars 12.

Once the massage of the stuffed-meat food products 2 performed using the compression bars 12 has finished, both the vacuum pump and the actuation means 13 are deactivated and the bell-shaped body 6 is brought back to the raised position, so as to open the processing chamber 1.

Subsequently, the conveyor 8 is activated, so as to transfer the stuffed-meat food products 2 downstream of the bell-shaped body 6.

From the foregoing it can be seen that the invention achieves the set aim and objects.

In particular, attention is drawn to the fact that the method and the machine according to the invention make it possible to very effectively and rapidly eliminate any air cavities that may be present in stuffed-meat food products.

All the characteristics of the invention, indicated above as advantageous, advisable or similar, may also be missing or substituted by equivalent characteristics.

The individual characteristics set out in reference to general teachings or to specific embodiments may all be present in other embodiments or may substitute characteristics in such embodiments.

The invention, thus conceived is susceptible of numerous modifications and variations, all of which are within the scope of the appended claims.

Hence, for example, the means 5 for executing a massage on the stuffed-meat food products 2 that are placed in the processing chamber 1 can optionally be implemented by elements, such as gloves that are associated with the box-like structure 4 so as to be airtight, in order to allow an operator to insert his hands into the processing chamber 1, the operator being encharged with manually performing the massage of the stuffed-meat food products 2 during the creation of the vacuum in the processing chamber 1.

In practice the materials used, provided they are compatible with the specific use, as well as the dimensions and the shapes may be any, according to requirements.

Moreover, all the details may be substituted by other, technically equivalent elements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for processing stuffed-meat food products, comprising the steps of arranging at least one stuffed-meat food product (2) wrapped by an envelope provided by openings to be processed in a processing chamber (1), producing the at least partial vacuum in said processing chamber (1), subjecting, simultaneously with the production of vacuum, said at least one stuffed-meat food product (2) arranged in said processing chamber (1) to a superficial massaging action by means of presser means (9) which are adapted to apply a compression to at least one localized region of the outer surface of said at least one stuffed-meat food product (2) and which are movable with an alternating motion and adapted to apply cyclically a compression to said at least one localized region of the outer surface of said at least one stuffed-meat food product (2) in order to allow the escape of air from said at least one stuffed-meat food product (2) through the openings of said envelope, and removing said at least one stuffed-meat food product (2) from said processing chamber (1).

2. A machine for processing stuffed-meat food products, comprising a supporting base (3) for a box-like structure (4) adapted to define at least one processing chamber (1) designed to accommodate removably at least one stuffed-meat food product (2) to be processed, said processing chamber (1) being connectible to means for producing the at least partial vacuum, **characterized in that** means (5) being provided, in said processing chamber (1), for performing a massaging action on the surface of said at least one stuffed-meat food product (2), said means (5) for performing a massage comprising presser means (9), which are adapted to apply a compression to at least one localized region of the outer surface of said at least one stuffed-meat food product (2) and which are movable with an alternating motion and adapted to apply cyclically a compression to said at least one localized region of the outer surface of said at least one stuffed-meat food product (2).

3. The machine according to claim 2, **characterized in that** said box-like structure (4) comprises a bell-shaped body (6) which is movable, with respect to said supporting base (3), to move from a lowered position, in which it defines said processing chamber (1) in cooperation with said supporting base (3), to a raised position, in which it allows the insertion or extraction of said at least one stuffed-meat food product (2) from said processing chamber (1), and vice versa.

4. The machine according to claim 3, **characterized in that** a conveyor (8) is mounted on said supporting base (3) and can be actuated with an intermittent motion for the transfer and extraction of said at least one stuffed-meat food product (2) from said processing chamber (1), said bell-shaped body (6) being arranged above said conveyor (8).

5. The machine according to claim 4, **characterized in that** said conveyor (8) comprises seats (10) which are mutually separated by dividers for loading, in each instance, on said conveyor (8), at least one stuffed-meat food product (2) to be sent to said processing chamber (1), said product being arranged, with its longitudinal axis of extension, substantially transversely to the direction of advancement of said conveyor (8).

6. The machine according to one or more of the preceding claims 4 and 5, **characterized in that** said presser means (9) comprise at least one compression bar (12), which is mounted in the upper part of said bell-shaped body (6) and is oriented with its axis substantially parallel to the advancement direction of said conveyor (8), said compression bar (12) being able to be actuated by actuation means (13) with an alternating approach and spacing motion with respect to said conveyor (8) to perform a cyclic compression on a respective portion of the outer surface of said at least one stuffed-meat food product (2) arriving in said processing chamber (1) on said conveyor (8).

7. The machine according to claim 6, **characterized in that** it comprises at least two compression bars (12), which can be actuated independently of each other to operate alternately on a respective portion of the outer surface of said at least one stuffed-meat food product (2).

8. The machine according to one or more of the preceding claims 4 and 5, **characterized in that** said presser means (9) comprise at least one compression element which is adapted to make contact with the outer surface of said at least one stuffed-meat food product (2) and can be actuated to move along a movement direction that is substantially parallel to the longitudinal extension of said at least one stuffed-meat food product (2).

9. The machine according to claim 3, **characterized in that** said bell-shaped body (6) has a suction inlet (6a) which is connectible to a vacuum pump.

10. The machine according to claim 6, **characterized in that** it comprises a programmable control unit which is adapted to drive the activation of said actuation means (13) and of said vacuum pump.

## Patentansprüche

1. Verfahren zur Verarbeitung von fleischgefüllten Lebensmittelprodukten, umfassend die Schritte Anordnen von mindestens einem von einer mit Öffnungen versehenen Hülle umgebenen fleischgefüllten Lebensmittelprodukt (2), welches in einer Bearbeitungskammer (1) verarbeitet wird, Produzieren des zumindest teilweisen Vakuums in der Bearbeitungskammer (1), gleichzeitig mit der Erzeugung des Vakuums Aussetzen des in der Bearbeitungskammer (1) angeordneten mindestens einen fleischgefüllten Lebensmittelprodukts (2) einer Oberflächenmassagebehandlung durch Druckmittel (9), welche zum Aufbringen eines Drucks auf mindestens einen örtlich begrenzten Bereich der äußeren Oberfläche des mindestens einen fleischgefüllten Lebensmittelprodukts (2) angepasst sind und welche mit einer alternierenden Bewegung bewegbar sind und zum zyklischen Aufbringen eines Drucks auf den mindestens einen örtlich begrenzten Bereich auf der äußeren Oberfläche des mindestens einen fleischgefüllten Lebensmittelprodukts (2) ausgebildet sind, um den Austritt von Luft aus dem mindestens einen fleischgefüllten Lebensmittelprodukt (2) durch die Öffnungen in der Hülle zu ermöglichen, und Entfernen des mindestens einen fleischgefüllten Lebensmittelprodukts (2) aus der Bearbeitungskammer (1).

2. Maschine zum Verarbeiten von fleischgefüllten Lebensmittelprodukten, umfassend eine Stützbasis (3) für eine kastenähnliche Struktur (4), die zum Definieren mindestens einer zur entfernbaren Aufnahme des mindestens einen zu verarbeitenden fleischgefüllten Lebensmittelprodukts (2) ausgebildeten Bearbeitungskammer (1) angepasst ist, wobei die Bearbeitungskammer (1) mit Mitteln zur Erzeugung des zumindest teilweisen Vakuums verbindbar ist, **dadurch gekennzeichnet, dass** Mittel (5) in der Bearbeitungskammer (1) bereitgestellt sind, um eine Massagebehandlung auf die Oberfläche des mindestens einen fleischgefüllten Lebensmittelprodukts (2) auszuüben, die Mittel (5) für die Ausübung einer Massage umfassen Druckmittel (9), welche angepasst sind, um einen Druck auf mindestens einen örtlich begrenzten Bereich der äußeren Oberfläche des mindestens einen fleischgefüllten Lebensmittelprodukts (2) aufzubringen und welche mit einer alternierenden Bewegung bewegbar sind und welche angepasst sind, um zyklisch einen Druck auf den mindestens einen örtlich begrenzten Bereich der äußeren Oberfläche des mindestens einen fleischgefüllten Lebensmittelprodukts (2) aufzubringen.

3. Maschine nach Anspruch 2, **dadurch gekennzeichnet, dass** die kastenähnliche Struktur (4) einen glockenförmigen Körper (6) aufweist, welcher bewegbar ist, um mit Bezug auf die Stützbasis (3) von einer unteren Position, in welcher er in Zusammenwirkung mit der Stützbasis (3) die Bearbeitungskammer (1) definiert, in eine angehobene Position, in der er das Einbringen oder Entnehmen des mindestens einen fleischgefüllten Lebensmittelprodukts (2) aus der Bearbeitungskammer (1) ermöglicht, bewegbar zu werden, und vice versa.

4. Maschine nach Anspruch 3, **dadurch gekennzeichnet, dass** eine Fördervorrichtung (8) auf der Stützbasis (3) montiert ist und mit einer intermittierenden Bewegung zum Fördern und Entnehmen des mindestens einen fleischgefüllten Lebensmittelprodukts (2) aus der Bearbeitungskammer (1) betreibbar ist, wobei der glöckenförmige Körper (6) oberhalb der Fördervorrichtung (8) angeordnet ist.

5. Maschine nach Anspruch 4 **dadurch gekennzeichnet, dass** die Fördervorrichtung (8) voneinander durch Trenner getrennte Aufnahmen (10) zum Laden, in jedem Vorgang, von mindestens einem in die Bearbeitungskammer (1) zu transportierenden fleischgefüllten Lebensmittelprodukt (2) auf die Fördervorrichtung (8) umfasst, wobei das Lebensmittelprodukt mit der Längsachse seiner Ausdehnung im Wesentlichen transversal zur Vorschubrichtung der Fördervorrichtung (8) angeordnet ist.

6. Maschine nach einem oder mehrerer der voranstehenden Ansprüche 4 und 5, **dadurch gekennzeichnet, dass** die Druckmittel (9) mindestens eine Druckstange (12) umfassen, welche im oberen Teil des glockenförmigen Körpers (6) montiert und mit ihrer Achse im Wesentlichen parallel zur Vorschubrichtung der Fördervorrichtung (8) orientiert ist, wobei die Druckstange (12) durch Antriebsmittel (13) mit einer alternierenden Ansatz- und Abstandsbewegung mit Bezug auf die Fördervorrichtung (8) antreibbar ist, um einen zyklischen Druck auf einen entsprechenden Abschnitt auf der äußeren Oberfläche des mindestens einen auf der Fördervorrichtung (8) in der Bearbeitungskammer (1) ankommenden fleischgefüllten Lebensmittelprodukts (2) auszuüben.

7. Maschine nach Anspruch 6, **dadurch gekennzeichnet, dass** sie mindestens zwei Druckstangen (12) umfasst, welche unabhängig voneinander zur alternierenden Einwirkung auf einen entsprechenden Abschnitt auf der äußeren Oberfläche des mindestens einen fleischgefüllten Lebensmittelprodukts (2) antreibbar sind.

8. Maschine nach einem oder mehrerer der voranstehenden Ansprüche 4 und 5, **dadurch gekennzeichnet, dass** die Druckmittel (9) mindestens ein Druckelement umfassen, welches zur Kontaktierung mit der äußeren Oberfläche des mindestens einen fleischgefüllten Lebensmittelprodukts (2) angepasst ist und längs einer Bewegungsrichtung, welche im Wesentlichen parallel zur Längserstreckung des mindestens einen fleischgefüllten Lebensmittelprodukts (2) ist, angetrieben werden kann.

9. Maschine nach Anspruch 3, **dadurch gekennzeichnet, dass** der glockenförmige Körper (6) einen mit einer Vakuumpumpe verbindbaren Saugeinlass (6a) hat.

10. Maschine nach Anspruch 6, **dadurch gekennzeichnet, dass** sie eine programmierbare Steuereinheit umfasst, welche zum Steuern der Aktivierung der Antriebsmittel (13) und der Vakuumpumpe angepasst ist.

## Revendications

1. Procédé pour traiter des produits alimentaires de viande farcie, comprenant les étapes de disposer au moins un produit alimentaire de viande farcie (2) enroulé d'une enveloppe munie avec des ouvertures et devant être traité dans une chambre de traitement (1), produire au moins le vide partiel dans ladite chambre de traitement (1), soumettre, simultanément à la production de vide, ledit au moins un produit alimentaire de viande farcie (2) disposé dans ladite chambre de traitement (1) à une action de massage superficiel au moyen de moyens presseurs (9) qui sont adaptés pour appliquer une compression à au moins une région localisée de la surface extérieure dudit au moins un produit alimentaire de viande farcie (2) et qui sont déplaçables avec un mouvement alternatif et adaptés pour appliquer cycliquement une compression à ladite au moins une région localisée de la surface extérieure dudit au moins un produit alimentaire de viande farcie (2) afin de permettre l'échappement d'air à partir dudit au moins un produit alimentaire de viande farcie (2) à travers les ouvertures de ladite enveloppe, et retirer ledit au moins un produit alimentaire de viande farcie (2) de ladite chambre de traitement (1).

2. Machine pour traiter des produits alimentaires de viande farcie, comprenant une base de support (3) pour une structure analogue à un boîtier (4) adaptée pour définir au moins une chambre de traitement (1) conçue pour recevoir de manière amovible au moins un produit alimentaire de viande farcie (2) à traiter, ladite chambre de traitement (1) pouvant être reliée à des moyens pour produire au moins le vide partiel, **caractérisée en ce que** des moyens (5) sont prévus, dans ladite chambre de traitement (1), pour réaliser une action de massage sur la surface dudit au moins un produit alimentaire de viande farcie (2), lesdits moyens (5) pour réaliser un massage comprenant des moyens presseurs (9), qui sont adaptés pour appliquer une compression à au moins une région localisée de la surface extérieure dudit au moins un produit alimentaire de viande farcie (2) et qui sont déplaçables avec un mouvement alternatif et adaptés pour appliquer cycliquement une compression à ladite au moins une région localisée de la surface extérieure dudit au moins un produit alimentaire de viande farcie (2).

3. Machine selon la revendication 2, **caractérisée en ce que** ladite structure analogue à un boîtier (4) comprend un corps en forme de cloche (6) qui peut être déplacé, par rapport à ladite base de support (3), pour se déplacer d'une position abaissée, dans laquelle il définit ladite chambre de traitement (1) en coopération avec ladite base de support (3), à une position levée, dans laquelle il permet l'insertion ou l'extraction dudit au moins un produit alimentaire de viande farcie (2) à partir de ladite chambre de traitement (1), et vice versa.

4. Machine selon la revendication 3, **caractérisée en ce qu'**un convoyeur (8) est monté sur ladite base de support (3) et peut être actionné avec un mouvement intermittent pour le transfert et l'extraction dudit au moins un produit alimentaire de viande farcie (2) à partir de ladite chambre de traitement (1), ledit corps en forme de cloche (6) étant agencé au-dessus dudit convoyeur (8).

5. Machine selon la revendication 4, **caractérisée en ce que** ledit convoyeur (8) comprend des logements (10) qui sont mutuellement séparés par des séparateurs pour charger, dans chaque cas, sur ledit convoyeur (8), au moins un produit alimentaire de viande farcie (2) devant être envoyé à ladite chambre de traitement (1), ledit produit étant disposé, avec son axe longitudinal d'extension, de manière sensiblement transversale à la direction d'avance dudit convoyeur (8).

6. Machine selon une ou plusieurs des revendications 4 et 5 précédentes, **caractérisée en ce que** lesdits moyens presseurs (9) comprennent au moins une barre de compression (12), qui est montée dans la partie supérieure dudit corps en forme de cloche (6) et est orientée avec son axe sensiblement parallèle à la direction d'avance dudit convoyeur (8), ladite barre de compression (12) pouvant être actionnée par des moyens d'actionnement (13) avec une approche alternative et un mouvement d'espacement par rapport audit convoyeur (8) pour réaliser une compression cyclique sur une portion respective de la surface extérieure dudit au moins un produit alimentaire de viande farcie (2) arrivant dans ladite chambre de traitement (1) sur ledit convoyeur (8).

7. Machine selon la revendication 6, **caractérisée en ce qu'**elle comprend au moins deux barres de compression (12), qui peuvent être actionnées indépendamment l'une de l'autre pour fonctionner alternativement sur une portion respective de la surface extérieure dudit au moins un produit alimentaire de viande farcie (2).

8. Machine selon une ou plusieurs des revendications 4 et 5 précédentes, **caractérisée en ce que** lesdits moyens presseurs (9) comprennent au moins un élément de compression qui est adapté pour faire contact avec la surface extérieure dudit au moins un produit alimentaire de viande farcie (2) et peut être actionné pour se déplacer le long d'une direction de mouvement qui est sensiblement parallèle à l'extension longitudinale dudit au moins un produit alimentaire de viande farcie (2).

9. Machine selon la revendication 3, **caractérisée en ce que** ledit corps en forme de cloche (6) a une entrée d'aspiration (6a) qui peut être reliée à une pompe à vide.

10. Machine selon la revendication 6, caractérisée ce qu'elle comprend une unité de commande programmable qui est adaptée pour entraîner l'activation desdits moyens d'actionnement (13) et de ladite pompe à vide.
